(19) Europäisches Patentamt / European Patent Office / Office européen des brevets

(11) **EP 3 159 719 B1**

(12) **EUROPEAN PATENT SPECIFICATION**

(45) Date of publication and mention
of the grant of the patent:
**30.05.2018   Bulletin 2018/22**

(21) Application number: **14897866.1**

(22) Date of filing: **16.07.2014**

(51) Int Cl.:
**G02B 6/30** *(2006.01)*      **G02B 6/122** *(2006.01)*
**G02B 6/125** *(2006.01)*      **G02B 6/12** *(2006.01)*

(86) International application number:
**PCT/CN2014/082308**

(87) International publication number:
**WO 2016/008114 (21.01.2016 Gazette 2016/03)**

(54) **SPOTSIZE CONVERTER AND APPARATUS FOR OPTICAL CONDUCTION**

PUNKTGRÖSSENUMWANDLER UND VORRICHTUNG FÜR OPTISCHE LEITUNG

CONVERTISSEUR DE TAILLE DE POINT, ET APPAREIL POUR LA CONDUCTION OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.04.2017   Bulletin 2017/17**

(73) Proprietor: **Huawei Technologies Co. Ltd.
Shenzhen, Guangdong 518129 (CN)**

(72) Inventors:
• **TU, Xin
Shenzhen
Guangdong 518129 (CN)**
• **FU, Hongyan
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 101 055 338          CN-B- 101 408 646
CN-C- 1 212 529            CN-U- 203 241 564
JP-A- H1 090 537           JP-A- 2007 093 743
US-A1- 2006 204 175        US-A1- 2010 188 367
US-A1- 2011 262 071        US-B1- 6 310 995

• QIAN WANG ET AL: "Y-branch spot-size
converter for a buried silica waveguide with large
index difference", APPLIED OPTICS, vol. 43, no.
16, 1 June 2004 (2004-06-01), page 3315,
XP055372224, WASHINGTON, DC; US ISSN:
0003-6935, DOI: 10.1364/AO.43.003315
• YAN LIU ET AL: "LOW-LOSS COUPLER
BETWEEN FIBER AND WAVEGUIDE BASED ON
SILICON-ON-INSULATOR SLOT WAVEGUIDES",
APPLIED OPTICS, OPTICAL SOCIETY OF
AMERICA, WASHINGTON, DC; US, vol. 46, no. 32,
10 November 2007 (2007-11-10), pages
7858-7861, XP001509347, ISSN: 0003-6935, DOI:
10.1364/AO.46.007858

**Description**

**TECHNICAL FIELD**

Embodiments of the present invention relate to the field of optical communications technologies, and in particular, to a spotsize converter and an apparatus for optical transmission.

**BACKGROUND**

With development of high-speed and large-capacity optical communications technologies, a key technology in an optical integrated device is to implement effective coupling between an optical waveguide and an optical fiber. For example, the optical waveguide may be a silicon-based photonic integrated circuit (Photonic Integrated Circuit, PIC) chip.

An optical signal needs to be coupled from a single-mode optical fiber to the silicon-based PIC chip. However, a size of a cross section of the silicon-based PIC chip is at a submicron level, and a diameter of a common single-mode optical fiber is at a micron level or even at a ten micron level, that is, the size of the cross section of the silicon-based PIC chip is much smaller than a core diameter of the common single-mode optical fiber. In addition, a silicon waveguide core layer in the silicon-based PIC chip has a relatively high refractive index. That is, there are mismatches between spot sizes and effective refractive indexes of the silicon-based PIC chip and the common single-mode optical fiber, and a great coupling loss between the PIC chip and the optical fiber is caused because of this mode field mismatch.

It is also very difficult to align the optical waveguide and the optical fiber. A loss of end-to-end coupling between the optical waveguide and the optical fiber may be even greater than 26 dB. Therefore, a problem of optical input and optical output of the silicon-based PIC chip is a great challenge.

At present, end face coupling is a manner for reducing the coupling loss between the optical waveguide and the optical fiber. In end face coupling, a spotsize converter is designed and manufactured at an edge of the silicon-based PIC chip, or it may be understood that a spotsize converter is added and connected between the optical waveguide and the optical fiber. A spot in the spotsize converter is coupled to a mode field in an external single-mode optical fiber, and a size of the spot in the spotsize converter can be changed.

At present, commonly used spotsize converters include: a forward tapered spotsize converter, a reverse tapered spotsize converter, multi-level tapered spotsize converter, a multi-waveguide spotsize converter, a three-dimensional tapered spotsize converter, and the like. However, a coupling loss between the silicon-based PIC chip and the single-mode optical fiber is still relatively large when a spotsize converter with such a structure is used.

QIAN WANG ET AL: "Y-branch spot-size converter for a buried silica waveguide with large index difference", APPLIED OPTICS, vol. 43, no. 16, 1 June 2004 (2004-06-01), page 3315, discloses :
A spotsize converter, wherein the spotsize converter comprises: a substrate layer; a first coverage layer disposed above the substrate layer, wherein the first coverage layer uses a first material; and a waveguide disposed inside the first coverage layer, wherein the waveguide is symmetrical along a principal axis, and the waveguide uses a second material; wherein the waveguide comprises a first waveguide, a second waveguide, and a third waveguide, a first end of the third waveguide is connected to a first end of the first waveguide, the first end of the third waveguide is connected to a first end of the second waveguide, and the first waveguide, the second waveguide, and the third waveguide form a Y shape; a distance, in a first direction, between the first waveguide and the second waveguide gradually decreases from a second end of the first waveguide to the first end of the first waveguide, wherein the first direction is located on a plane on which the waveguide is located, and the first direction is perpendicular to the principal axis; and a difference between a refractive index of the second material and the refractive index of the first material is greater than a threshold.

**SUMMARY**

Embodiments of the present invention provide a spotsize converter, which can reduce a coupling loss between an optical waveguide and an optical fiber.

A first aspect provides a spotsize converter, where the spotsize converter includes: a substrate layer; a first coverage layer disposed above the substrate layer, where the first coverage layer uses a first material; an isolating layer disposed between the substrate layer and the first coverage layer, where the isolating layer uses a second material; and a waveguide disposed inside the first coverage layer, where the waveguide is symmetrical along a principal axis, and the waveguide uses a third material; where the waveguide includes an equal-width first waveguide, an equal-width second waveguide, and a third waveguide, a first end of the third waveguide is connected to a first end of the first waveguide, the first end of the third waveguide is connected to a first end of the second waveguide, and the first waveguide, the second waveguide, and the third waveguide form a Y shape; along a first direction of the principal axis, a width of the third waveguide gradually increases from the first end of the third waveguide to a second end of the third waveguide, and a distance, in a second direction, between the first waveguide

and the second waveguide gradually decreases from a second end of the first waveguide to the first end of the first waveguide, where the second direction is located on a plane on which the waveguide is located, and the second direction is perpendicular to the first direction; and

an absolute value of a difference between a refractive index of the second material and a refractive index of the first material is less than a first threshold, and a difference between a refractive index of the third material and the refractive index of the first material is greater than a second threshold.

With reference to the first aspect, in a first possible implementation manner of the first aspect, a cross section of the substrate layer is concave, a cross section of the isolating layer is concave, a cross section of the first coverage layer is a rectangle, and the spotsize converter further includes:

a second coverage layer disposed above the substrate layer, where the second coverage layer is disposed outside the isolating layer, and the second coverage layer uses the first material.

With reference to the first aspect or the first possible implementation manner of the first aspect, in a second possible implementation manner of the first aspect, the waveguide further includes a fourth waveguide disposed above the third waveguide, where

a width of the fourth waveguide gradually increases along the first direction, and the width of the fourth waveguide is less than the width of the third waveguide on any cross section between the first end of the third waveguide and the second end of the third waveguide.

With reference to the second possible implementation manner of the first aspect, in a third possible implementation manner of the first aspect, a shape of the third waveguide is an isosceles trapezoid, a shape of the fourth waveguide is an isosceles triangle, and the first waveguide and the second waveguide are S-shaped, and

a length of the fourth waveguide is equal to a length of the third waveguide, the fourth waveguide is aligned with the third waveguide at the second end of the third waveguide, and a width of an end at which a baseline of the isosceles triangle of the fourth waveguide is located is equal to a width of the second end of the third waveguide.

With reference to the second possible implementation manner of the first aspect or the third possible implementation manner of the first aspect, in a fourth possible implementation manner of the first aspect, a length of the waveguide is L1, lengths of the third waveguide and the fourth waveguide are L2, thickness of the first waveguide, thickness of the second waveguide, and thickness of the third waveguide are H1, thickness of the fourth waveguide is H2, widths of the first waveguide and the second waveguide are W1, the width of the second end of the third waveguide is W2, and a distance between the waveguide and a bottom of the isolating layer is H3, where

$$0 < L1 \leq 500 \ \mu m, \ 0 < L2 \leq 200 \ \mu m, \ 0 < H1 \leq H1 + H2 \leq 400 \ nm, \ H3 > 5 \ \mu m,$$

$$0 < W1 \leq 300 \ nm, \ and \ 200 \ nm \leq W2 \leq 600 \ nm.$$

With reference to the fourth possible implementation manner of the first aspect, in a fifth possible implementation manner of the first aspect, L1=300 $\mu m$, L2=100 $\mu m$, H1=120 nm, H2=100 nm, W1=180 nm, W2=500 nm.

With reference to any one of the first aspect or the possible implementation manners of the first aspect, in a sixth possible implementation manner of the first aspect, a distance between the second end of the first waveguide and a second end of the second waveguide is greater than 1 $\mu m$ and less than 10 $\mu m$.

With reference to any one of the first aspect or the foregoing possible implementation manners of the first aspect, in a seventh possible implementation manner of the first aspect, the waveguide further includes N add/drop waveguides, and

the N add/drop waveguides are connected to the first end of the third waveguide, and the N add/drop waveguides are aligned with the first waveguide, where N is a positive integer.

With reference to any one of the first aspect or the possible implementation manners of the first aspect, in an eighth possible implementation manner of the first aspect, a material used by the substrate layer is silicon, the first material is silicon dioxide, the second material is engine oil, and the third material is silicon or silicon nitride.

A second aspect provides an apparatus for optical transmission, where the apparatus includes: the spotsize converter according to any one of the first aspect or possible implementation manners of the first aspect and an optical waveguide, where the spotsize converter is configured to couple an optical signal to the optical waveguide, where the optical signal is input from an optical fiber.

With reference to the second aspect, in a first possible implementation manner of the second aspect, the spotsize converter is connected to the optical waveguide by using a second end of the third waveguide, and a width of the second end of the third waveguide is equal to a width of the optical waveguide.

With reference to the second aspect or the first possible implementation manner of the second aspect, in a second possible implementation manner of the second aspect, a sum of the thickness of the third waveguide and the thickness of the fourth waveguide is equal to thickness of the optical waveguide, where the third waveguide and the fourth waveguide are of the spotsize converter that includes the fourth waveguide.

The embodiments of the present invention provide a spotsize converter. The spotsize converter includes a first waveguide, a second waveguide, and a third waveguide that form a Y shape. The spotsize converter can be used to implement spot size conversion between an optical fiber and an optical waveguide, and a coupling loss between the optical fiber and the optical waveguide can be reduced by using the spotsize converter.

## BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a spotsize converter according to an embodiment of the present invention;
FIG. 2 is a planar diagram of a waveguide in a spotsize converter according to an embodiment of the present invention;
FIG. 3 is a schematic diagram of a spotsize converter according to another embodiment of the present invention;
FIG. 4 is a planar diagram of a waveguide in a spotsize converter according to another embodiment of the present invention;
FIG. 5 is an end face diagram of a cross section in which a-a' of a spotsize converter is located according to another embodiment of the present invention;
FIG. 6 is an end face diagram of a cross section in which b-b' of a spotsize converter is located according to another embodiment of the present invention;
FIG. 7 is an end face diagram of a cross section in which c-c' of a spotsize converter is located according to another embodiment of the present invention;
FIG. 8 is a schematic diagram of optical field distribution according to an embodiment of the present invention;
FIG. 9 is a curve diagram of a relationship between a coupling loss and a wavelength according to an embodiment of the present invention;
FIG. 10 is a curve diagram of a relationship between a coupling loss and an alignment tolerance for a TE mode according to an embodiment of the present invention;
FIG. 11 is a curve diagram of a relationship between a coupling loss and an alignment tolerance for a TM mode according to an embodiment of the present invention;
FIG. 12 is a planar diagram of a waveguide in a spotsize converter according to another embodiment of the present invention;
FIG. 13 is a schematic diagram of an apparatus for optical transmission according to an embodiment of the present invention; and
FIG. 14 is a planar diagram of a waveguide in an apparatus for optical transmission according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

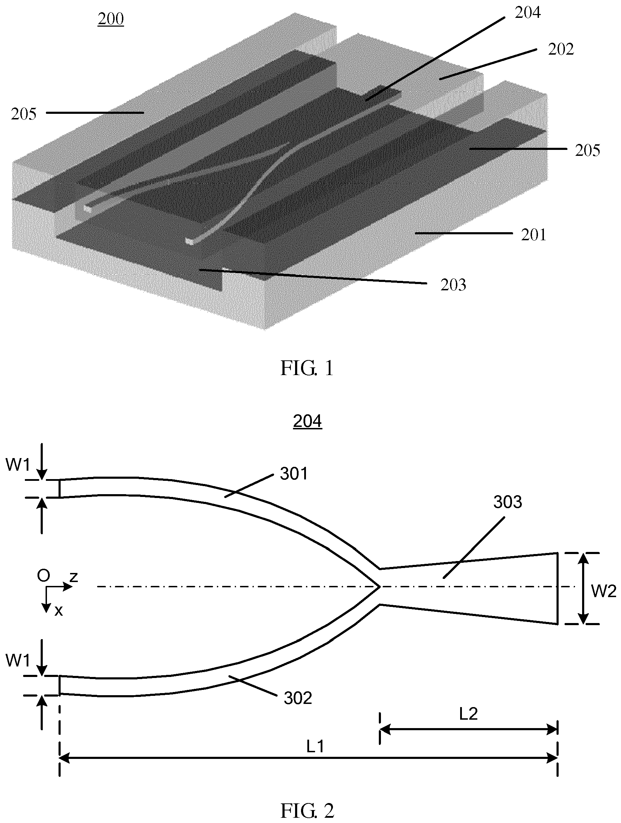

FIG. 1 is a schematic diagram of a spotsize converter according to an embodiment of the present invention. The spotsize converter 200 shown in FIG. 1 includes:

a substrate layer 201;
a first coverage layer 202 disposed above the substrate layer 201, where the first coverage layer uses a first material;
an isolating layer 203 disposed between the substrate layer 201 and the first coverage layer 202, where the isolating layer uses a second material; and
a waveguide 204 disposed inside the first coverage layer, where the waveguide 204 is symmetrical along a principal axis, and the waveguide 204 uses a third material.

The waveguide 204 may be shown in FIG. 2. The principal axis is indicated by a dotted line. Specifically, the waveguide 204 includes an equal-width first waveguide 301, an equal-width second waveguide 302, and a third waveguide 303. A first end of the third waveguide 303 is connected to a first end of the first waveguide 301 and a first end of the second waveguide 302. The first waveguide 301, the second waveguide 302, and the third waveguide 303 form a Y shape. In addition, along a first direction of the principal axis, a width of the third waveguide 303 gradually increases, and a distance, in a second direction, between the first waveguide 301 and the second waveguide 302 gradually decreases. The second direction is perpendicular to the first direction. An absolute value of a difference between a refractive index of the second material and a refractive index of the first material is less than a first threshold, and a difference between a refractive index of the third material and the refractive index of the first material is greater than a second threshold.

This embodiment of the present invention provides a spotsize converter. The spotsize converter includes a first waveguide, a second waveguide, and a third waveguide that form a Y shape. The spotsize converter can be used to implement spot size conversion between an optical fiber and an optical waveguide, and a coupling loss between the optical fiber and the optical waveguide can be reduced by using the spotsize converter.

In this embodiment of the present invention, the spotsize converter can be added and connected to an end of the optical waveguide. Specifically, the spotsize converter can be connected to the optical waveguide by using a second end of the third waveguide. A manner of connection between the spotsize converter and the optical waveguide is not limited in this embodiment of the present invention. For example, the second end of the third waveguide may be directly connected to the optical waveguide, or the second end of the third waveguide may be connected to the optical waveguide by using a rectangular waveguide. This is not limited in the present invention.

In this embodiment of the present invention, it is assumed that a cross section of the optical waveguide is a rectangle, a width of the optical waveguide is W4, and a height is H4.

It should be noted that in this embodiment of the present invention, a cross section refers to a section perpendicular to a length direction. Alternatively, it may be understood that a cross section is a section perpendicular to the first direction.

Optionally, in this embodiment of the present invention, as shown in FIG. 1, a cross section of the substrate layer 201 is concave, a cross section of the isolating layer 203 is concave, and a cross section of the first coverage layer 202 is a rectangle. The spotsize converter 200 may further include a second coverage layer 205 disposed above the substrate layer 201. The second coverage layer 205 is disposed outside the isolating layer 203, and the second coverage layer 205 uses the first material.

It may be understood that the isolating layer 203 may be formed by deeply etching a U groove and filling the U groove with the second material. A length of the isolating layer 203 may be less than or equal to a length of the substrate layer 201. This is not limited in the present invention.

When the length of the isolating layer 203 is less than the length of the substrate layer 201, it may be understood that the first coverage layer 202 and the second coverage layer 205 may jointly form a U shape and a cantilever part.

Specifically, in the spotsize converter 200 shown in FIG. 1, the length of the isolating layer 203 is equal to the length of the substrate layer 201.

For ease of description, FIG. 2 further shows an Oxz coordinate system. It may be understood that the first direction is a positive direction of a z axis. In addition, the width of the third waveguide 303 gradually increases along the positive direction of the z axis.

Optionally, shapes of the first waveguide 301 and the second waveguide 302 may be straight lines or curves. This is not limited in the present invention. For example, the first waveguide 301 and the second waveguide 302 may be C-shaped or S-shaped.

Optionally, as shown in FIG. 2, a shape of the third waveguide 303 is an isosceles trapezoid. Alternatively, an outline of the third waveguide 303 in a z-axis direction may be a curve. This is not limited in the present invention.

In addition, it is assumed that a length of the waveguide 204 is L1, and a length of the third waveguide 303 is L2. It is assumed that widths of the first waveguide 301 and the second waveguide 302 are W1, and the width of the second end of the third waveguide 303 is W2. It is assumed that thickness of the first waveguide 301, thickness of the second waveguide 302, and thickness of the third waveguide 303 are all H1. It is assumed that a distance between the waveguide 204 and a bottom of the isolating layer is H3. It may be understood that in this embodiment of the present invention, a length is a size in a z-axis direction of coordinate axes, and a width is a size in an x-axis direction of the coordinate axes. Correspondingly, thickness is a size in a y-axis direction of the coordinate axes (that is, an outward direction in FIG. 2).

Therefore, it may be understood that for the waveguide 204 in FIG. 1 and FIG. 2, the width W2 of the second end of the third waveguide 303 may be equal to the width W4 of the optical waveguide, that is, W2=W4. The thickness H1 of the third waveguide 303 may be equal to the thickness H4 of the optical waveguide, that is, H1=H4.

Ranges of the foregoing parameters may be as follows: $H3 > 5 \ \mu m$, $0 < H1 \le 400$ nm, $0 < L1 \le 500 \ \mu m$, $0 < L2 \le 200 \ \mu m$, $L2 < L1$, $0 < W1 \le 300$ nm, and $200$ nm $\le W2 \le 600$ nm.

In addition, a distance between a second end of the first waveguide 301 and a second end of the second waveguide 302 may be several micrometers or a dozen micrometers. This is not limited in the present invention. Optionally, the distance may be greater than $0.5 \ \mu m$ and less than $10 \ \mu m$. For example, the distance may be $1.2 \ \mu m$.

Optionally, the waveguide 204 may further include N add/drop waveguides. The N add/drop waveguides are connected to the first end of the third waveguide, and the N add/drop waveguides are aligned with the first waveguide 301, where N is a positive integer. It may be understood that lengths of the N add/drop waveguides are equal to a length of the first waveguide 301. Optionally, the N add/drop waveguides have an equal width, and widths of the N add/drop waveguides may be equal to a width of the first waveguide 301.

Optionally, in the spotsize converter 200 shown in FIG. 1, a material used by the substrate layer 201 may be silicon, the first material may be silicon dioxide, the second material may be engine oil, and the third material may be silicon or silicon nitride.

Alternatively, the second material may be other lube oil, or the like.

It should be noted that sizes of the first threshold and the second threshold are not limited in this embodiment of the present invention. Generally, the first threshold is less than the second threshold. For example, the first threshold may be 0.3, and the second threshold may be 1.8. This is not limited in the present invention.

In this embodiment of the present invention, the substrate layer 201 is used to support the waveguide 204. The first coverage layer 202 is used to limit an optical mode in the waveguide 204. The isolating layer 203 is used to ensure that the optical mode in the waveguide 204 is far away from the substrate layer 201.

It should be noted that thickness of the substrate layer 201, thickness of the first coverage layer 202, thickness of the second coverage layer 205, and thickness of the isolating layer 203 are not specifically limited in this embodiment of the present invention.

Optionally, in this embodiment of the present invention, a length of the substrate layer 201 is equal to a length of the coverage layer 202, and the length of the substrate layer 201 may be equal to a length of the waveguide 204.

It may be understood that in this embodiment of the present invention, the waveguide 204 may be formed by processing a material. For example, the waveguide 204 may be formed by performing molding processing on the third material by using a photoetching technology.

In this way, for the spotsize converter 200 shown in FIG. 1, when an output optical signal of the optical fiber is input to the spotsize converter 200 from the cantilever part, optical energy may be distributed between the first waveguide 301 and the second waveguide 302. Then, the optical energy may slowly enter the third waveguide 303 by means of coupling, and the optical signal is further output to the rear optical waveguide.

Similarly, for the spotsize converter 200 shown in FIG. 1, when an output optical signal of the optical waveguide is input to the spotsize converter 200 from the third waveguide 303, the optical signal may be output to the optical fiber by using an optical field between the first waveguide 301 and the second waveguide 302.

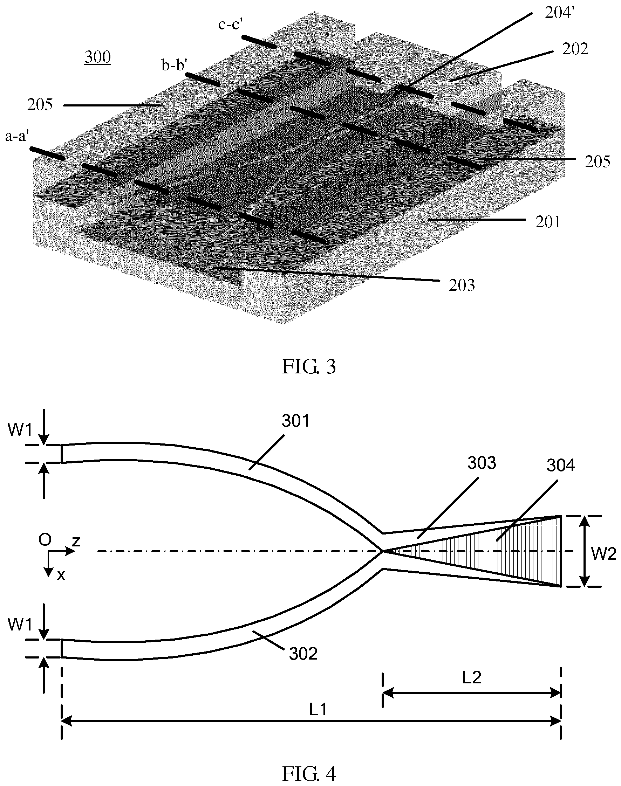

Based on the spotsize converter 200 shown in FIG. 1, the waveguide 204 may further include a fourth waveguide. As shown in FIG. 3, FIG. 3 is a schematic diagram of a spotsize converter according to another embodiment of the present invention. The spotsize converter 300 shown in FIG. 3 includes a substrate layer 201; a first coverage layer 202 disposed above the substrate layer 201, where the first coverage layer uses a first material; an isolating layer 203 disposed between the substrate layer 201 and the first coverage layer 202, where the isolating layer uses a second material; and a waveguide 204' disposed inside the first coverage layer, where the waveguide 204' is symmetrical along a principal axis, and the waveguide 204' uses a third material.

The waveguide 204' may be shown in FIG. 4. The principal axis is indicated by a dotted line. Specifically, the waveguide 204' includes an equal-width first waveguide 301, an equal-width second waveguide 302, and a third waveguide 303. A first end of the third waveguide 303 is connected to a first end of the first waveguide 301 and a first end of the second waveguide 302, and the first waveguide 301, the second waveguide 302, and the third waveguide 303 form a Y shape. In addition, along a first direction of the principal axis, a width of the third waveguide 303 gradually increases, and a distance, in a second direction, between the first waveguide 301 and the second waveguide 302 gradually decreases. The second direction is perpendicular to the first direction. An absolute value of a difference between a refractive index of the second material and a refractive index of the first material is less than a first threshold, and a difference between a refractive index of the third material and the refractive index of the first material is greater than a second threshold.

The waveguide 204' further includes a fourth waveguide 304 disposed above the third waveguide 303. A width of the fourth waveguide 304 gradually increases along the first direction, and the width of the fourth waveguide 304 is less than the width of the third waveguide 303 on any cross section between the first end of the third waveguide 303 and the second end of the third waveguide 303.

In this way, in this embodiment of the present invention, the spotsize converter 300 may be connected to an optical waveguide by using the second end of the third waveguide 303 and a second end of the fourth waveguide 304. A manner of connection between the spotsize converter and the optical waveguide is not limited in this embodiment of the present invention.

It should be noted that in this embodiment of the present invention, to avoid repetition, parts with same serial numbers in FIG. 1 and FIG. 2 are not described herein again in detail.

Optionally, in this embodiment of the present invention, the fourth waveguide 304 may be an isosceles triangle.

A length of the fourth waveguide 304 may be less than or equal to a length of the third waveguide 303. An end at which a baseline of the isosceles triangle of the fourth waveguide 304 is located is aligned with the second end of the third waveguide 303, and a width of the end at which the baseline of the isosceles triangle of the fourth waveguide 304 is located may be equal to a width of the second end of the third waveguide 303.

In addition, it is assumed that a cross section of the optical waveguide is a rectangle, a width of the optical waveguide is W4, and a height of the optical waveguide is H4.

It is assumed that a length of the waveguide 204' is L1, and the length of the third waveguide 303 is L2. It is assumed that widths of the first waveguide 301 and the second waveguide 302 are W1, and the width of the second end of the third waveguide 303 is W2. It is assumed that thickness of the first waveguide 301, thickness of the second waveguide 302, and thickness of the third waveguide 303 are all H1. It is assumed that thickness of the fourth waveguide is H2. It is assumed that a distance between the waveguide 204' and a bottom of the isolating layer is H3. It may be understood that in this embodiment of the present invention, a length is a size in a z-axis direction of coordinate axes, and a width is a size in an x-axis direction of the coordinate axes. Correspondingly, thickness is a size in a y-axis direction of the coordinate axes (that is, an outward direction in FIG. 2).

If it is assumed that a narrower end of the fourth waveguide 304 is a first end of the fourth waveguide 304, and a wider end of the fourth end 304 is a second end of the fourth waveguide 304, a width of the second end of the fourth waveguide 304 may be W2.

Therefore, it may be understood that for the waveguide 204' in FIG. 3 and FIG. 4, the width W2 of the second end of the third waveguide 303 may be equal to the width W4 of the optical waveguide, that is, W2=W4. A sum of the thickness H1 of the third waveguide 303 and the thickness H2 of the fourth waveguide 304 may be equal to thickness H4 of the optical waveguide, that is, H1+H2=H4.

Ranges of the foregoing parameters may be as follows: $H3 > 5 \ \mu m$, $0 < H1 < H1+H2 \leq 400 \ nm$, $0 < L1 \leq 500 \ \mu m$, $0 < L2 \leq 200 \ \mu m$, $L2 < L1$, $0 < W1 \leq 300 \ nm$, and $200 \ nm \leq W2 \leq 600 \ nm$.

In addition, a distance between a second end of the first waveguide 301 and a second end of the second waveguide 302 may be several micrometers or a dozen micrometers. This is not limited in the present invention. Optionally, the distance may be greater than $0.5 \ \mu m$ and less than $10 \ \mu m$. For example, the distance may be $1.2 \ \mu m$.

Optionally, the waveguide 204' shown in FIG. 4 may be formed by perform photoetching on the third material for multiple times.

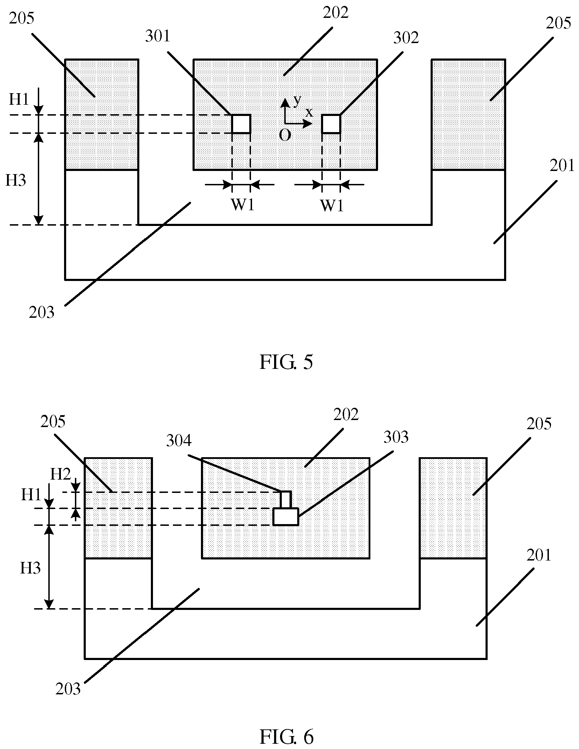

To further clearly describe the spotsize converter 300 in this embodiment of the present invention, FIG. 5 to FIG. 7 are end face diagrams of cross sections of the spotsize converter 300.

An end face diagram shown in FIG. 5 is an end face diagram of a cross section in which a-a' in FIG. 3 is located. The end face diagram shows that thickness of the first waveguide 301 and thickness of the second waveguide 302 are H1, widths of the first waveguide 301 and the second waveguide 302 are W1, and distances from the first waveguide 301 and the second waveguide 302 to the bottom of the isolating layer are H3. In addition, it is assumed that a plane of the cross section in which a-a' is located is an x-y plane. FIG. 5 further shows an Oxy coordinate system, where the first waveguide 301 and the second waveguide 302 are symmetrical with respect to a y axis, an x axis is an axis of symmetry of the first waveguide, and the x axis is an axis of symmetry of the second waveguide.

An end face diagram shown in FIG. 6 is an end face diagram of a cross section in which b-b' in FIG. 3 is located. The end face diagram shows that thickness of the third waveguide 303 is H1, a distance from the third waveguide 303 to the bottom of the isolating layer is H3, and thickness of the fourth waveguide 304 is H2.

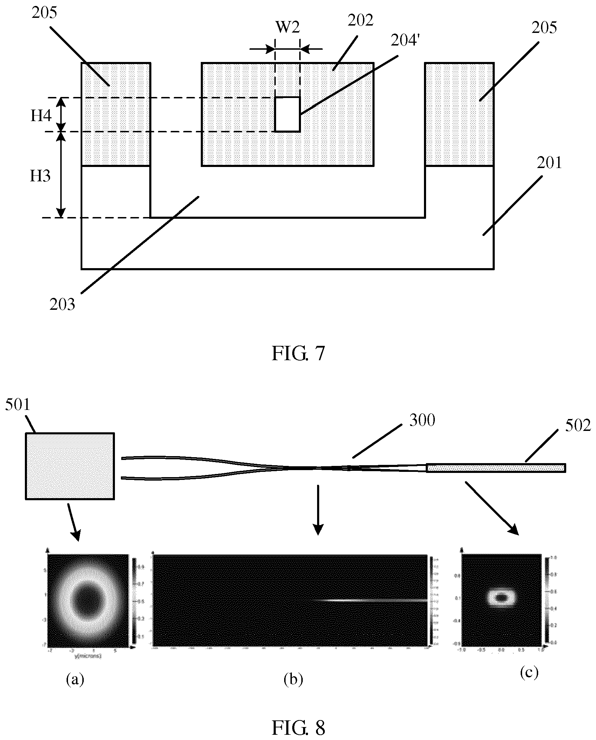

An end face diagram shown in FIG. 7 is an end face diagram of a cross section in which c-c' in FIG. 3 is located. The end face diagram shows that thickness of the waveguide 204' is H4, a distance from the waveguide 204' to the bottom of the isolating layer is H3, and a width of the waveguide 204' is W2. In addition, H4 = H1 + H2. It may be understood that the cross section in which c-c' is located is a cross section in which the second end of the third waveguide 303 and the second end of the fourth waveguide 304 are located.

Optionally, in an embodiment, when a width of the optical waveguide W4=500 nm, and thickness of the optical waveguide H4=220 nm, values of the parameters of the spotsize converter 300 from FIG. 3 to FIG. 7 may be shown in Table 1.

**Table 1**

| Parameter | H1 | H2 | H3 | G |
|---|---|---|---|---|
| Value | 120 nm | 100 nm | $10 \ \mu m$ | $1.2 \ \mu m$ |
| Parameter | L1 | L2 | W1 | W2 |
| Value | $300 \ \mu m$ | $100 \ \mu m$ | 180 nm | 500 nm |

In this way, this embodiment of the present invention provides a spotsize converter. The spotsize converter includes a first waveguide, a second waveguide, and a third waveguide that form a Y shape, and a fourth waveguide disposed above the third waveguide. The spotsize converter can be used to implement spot size conversion between an optical fiber and an optical waveguide, and a coupling loss between the optical fiber and the optical waveguide can be reduced by using the spotsize converter.

For example, if the spotsize converter 300 shown in FIG. 3 is disposed between the optical fiber and the optical waveguide, an optical signal output from the optical fiber may be coupled to the spotsize converter 300. There is an optical field distributed between the first waveguide and the second waveguide. Then, the optical signal may be coupled to the third waveguide and the fourth waveguide, and further coupled to the rear optical waveguide.

Optionally, for example, the parameters of the spotsize converter use the values shown in Table 1. FIG. 8 is a schematic diagram of optical field distribution obtained by using a finite-difference time-domain (Finite Difference Time Domain, FDTD) method. An optical fiber 501 is an SMF-28 single-mode optical fiber. An outer diameter of the SMF-28 single-mode optical fiber is 125 $\mu$m, and an inner diameter is 8.2 $\mu$m.

A mode field of an optical signal output from the optical fiber 501 is shown in FIG. 8(a), and can be understood as a mode field of an input optical signal of the spotsize converter 300. A spot diameter of the mode field is approximately 10 $\mu$m. It should be noted that FIG. 8(a) shows optical field distribution of a cross section of the optical fiber 501.

FIG. 8(b) shows optical field distribution in the waveguide 204' of the spotsize converter 300. An optical field between the first waveguide and the second waveguide is weaker than an optical field in the third waveguide and the fourth waveguide. It should be noted that FIG. 8(b) shows optical field distribution of a longitudinal section of the waveguide 204'.

FIG. 8(c) is a mode field of an input optical signal of a rear optical waveguide 502 connected to the spotsize converter 300, and the mode field can also be understood as a mode field of an output optical signal of the spotsize converter 300. A spot size of the mode field is approximately 500 nm $\times$ 220 nm. It should be noted that FIG. 8(c) shows optical field distribution of a cross section of the optical waveguide 502.

In this way, a micron-level spot in the optical fiber 501 is converted into a submicron-level spot in the optical waveguide by using the spotsize converter 300.

It should be noted that the spotsize converter 300 in FIG. 8 is merely indicated by the waveguide 204' exemplarily.

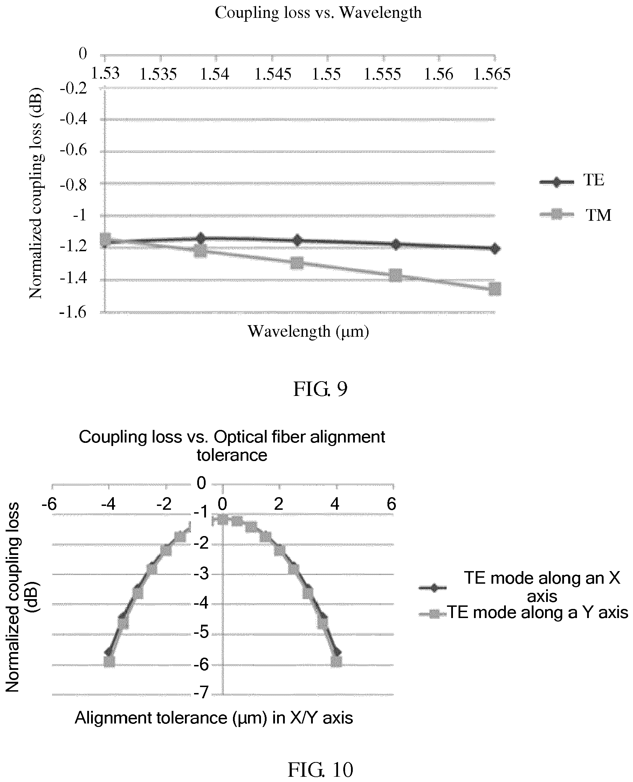

In addition, a coupling loss between the optical fiber and the optical waveguide can be reduced by using the spotsize converter. FIG. 9 shows a curve diagram of a relationship between a coupling loss and a wavelength. A wavelength range is a C band, that is, 1.53 $\mu$m-1.565 $\mu$m. A coupling loss for a transverse electric (Transverse Electric, TE) wave is less than 1.2 dB, and a coupling loss for a transverse magnetic (Transverse Magnetic, TM) wave is less than 1.5 dB.

In addition, an alignment tolerance is relatively large when the spotsize converter is used. Specifically, the alignment tolerance is offset between an axis of an optical fiber and a coordinate axis shown in FIG. 5. The alignment tolerance may also be referred to as an optical fiber alignment tolerance.

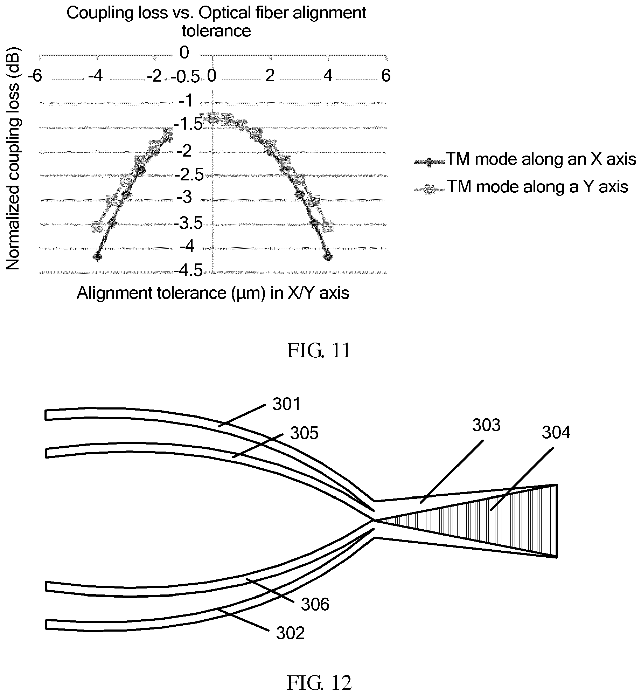

Specifically, FIG. 10 shows a curve diagram of a relationship between a coupling loss and an alignment tolerance for a TE mode when a wavelength is 1.547 $\mu$m. FIG. 11 shows a curve diagram of a relationship between a coupling loss and an alignment tolerance for a TM mode when a wavelength is 1.547 $\mu$m.

It can be learned from FIG. 10 and FIG. 11 that a range of the alignment tolerance obtained when the coupling loss is less than 3 dB is shown in Table 2. Alignment tolerances are all greater than 3 $\mu$m.

**Table 2**

|  | x axis | y axis |
|---|---|---|
| TE mode | +/-3.4 $\mu$m | +/-3.2 $\mu$m |
| TM mode | +/-3.0 $\mu$m | +/-3.5 $\mu$m |

It can be learned that there is a relatively large alignment tolerance by using the spotsize converter provided in this embodiment of the present invention. That is, a requirement of alignment between the optical fiber and the spotsize converter can be reduced by using the spotsize converter provided in this embodiment of the present invention.

It may be understood that in the foregoing embodiment, the waveguide 204 or the waveguide 204' in the spotsize converter is symmetrical in structure, and a symmetry plane is a plane perpendicular to a width direction, or the symmetry plane may be understood as a y-z plane. Optionally, the waveguide 204' in the foregoing embodiment may further include N add/drop waveguides connected to the first end of the third waveguide 303, and the N add/drop waveguides are aligned with the first waveguide 301. N is a positive integer. It may be understood that lengths of the N add/drop waveguides are equal to a length of the first waveguide 301. Optionally, the N add/drop waveguides have an equal width, and widths of the N add/drop waveguides may be equal to a width of the first waveguide 301.

For example, FIG. 12 shows a schematic diagram of a longitudinal section of a waveguide according to another embodiment of the present invention. The waveguide includes N=2 add/drop waveguides: a fifth waveguide 305 and a sixth waveguide 306. The fifth waveguide 305 and the sixth waveguide 306 are symmetrical with respect to a y axis. The y axis is an outward direction of FIG. 12, and is consistent with the y axis in FIG. 5.

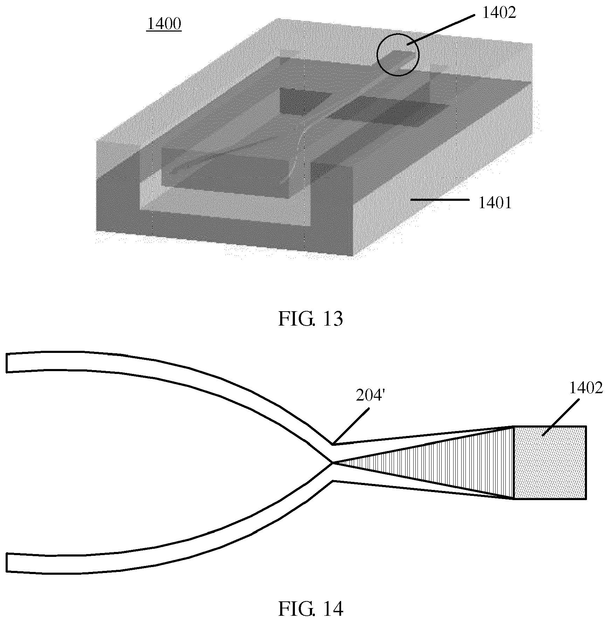

FIG. 13 is an apparatus for optical transmission according to an embodiment of the present invention. The apparatus shown in FIG. 13 includes a spotsize converter 1401 and an optical waveguide 1402.

The spotsize converter 1401 is configured to couple an optical signal to the optical waveguide 1402, where the optical signal is input from an optical fiber. The spotsize converter 1401 may be the spotsize converter in any one of the foregoing embodiments, for example, may be the spotsize converter 200 or the spotsize converter 300.

In this way, this embodiment of the present invention provides an apparatus for optical transmission. The apparatus includes a spotsize converter and an optical waveguide. The spotsize converter couples an optical signal to the optical waveguide, where the optical signal is input from an external optical fiber, and a coupling loss is relatively small.

In addition, a tolerance of alignment between the apparatus and the optical fiber is relatively large. For specific description, reference may be made to the foregoing embodiment. To avoid repetition, details are not described herein again.

Referring to the foregoing embodiment, the spotsize converter 1401 includes a waveguide. The waveguide at least includes a first waveguide, a second waveguide, and a third waveguide. The spotsize converter 1401 may be connected to the optical waveguide 1402 by using a second end of the third waveguide, and a width of the second end of the third waveguide is equal to a width of the optical waveguide 1402.

Optionally, in an embodiment, thickness of the waveguide of the spotsize converter 1401 may be equal to thickness of the optical waveguide 1402. For example, the spotsize converter 1401 is the spotsize converter 200 in the foregoing embodiment.

Optionally, in another embodiment, the spotsize converter 1401 further includes a fourth waveguide disposed above the third waveguide. In this case, a sum of thickness of the third waveguide and thickness of the fourth waveguide of the spotsize converter 1401 may be equal to thickness of the optical waveguide 1402. For example, the spotsize converter 1401 is the spotsize converter 300 in the foregoing embodiment.

It is assumed that the spotsize converter 1401 is the spotsize converter 300 in the foregoing embodiment. FIG. 14 is a planar diagram of a waveguide in an apparatus for optical transmission according to an embodiment of the present invention. It may be understood that FIG. 14 includes the waveguide 204' in the spotsize converter 300 and the optical waveguide 1402.

In this embodiment of the present invention, a material used by the optical waveguide 1402 and a material used by the waveguide in the spotsize converter 1401 are the same, and both are a third material. For example, the third material may be silicon or silicon nitride.

It should be noted that the present invention merely provides some embodiments of the spotsize converter. Another embodiment obtained by a person of ordinary skill in the art based on the foregoing embodiments shall fall within the protection scope of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A spotsize converter (200, 300, 1401), wherein the spotsize converter comprises:

   a substrate layer (201);
   a first coverage layer (202) disposed above the substrate layer (201), wherein the first coverage layer (202) uses a first material;
   an isolating layer (203) disposed between the substrate layer (201) and the first coverage layer (202), wherein the isolating layer (203) uses a second material; and
   a waveguide (204, 204') disposed inside the first coverage layer (202), wherein the waveguide (204, 204') is symmetrical along a principal axis, and the waveguide (204, 204') uses a third material; wherein the waveguide (204, 204') comprises an equal-width first waveguide (301), an equal-width second waveguide (302), and a third waveguide (303), a first end of the third waveguide (303), is connected to a first end of the first waveguide (301), the first end of the third waveguide (303) is connected to a first end of the second waveguide (302), and the first waveguide (301), the second waveguide (302), and the third waveguide (303) form a Y shape;
   along a first direction of the principal axis, a width of the third waveguide (303) gradually increases from the first end of the third waveguide (303) to a second end of the third waveguide (303), and a distance, in a second direction, between the first waveguide (301) and the second waveguide (302) gradually decreases from a second end of the first waveguide (301) to the first end of the first waveguide (301), wherein the second direction is located on a plane on which the waveguide (204, 204') is located, and the second direction is perpendicular to the first direction; and
   an absolute value of a difference between a refractive index of the second material and a refractive index of the first material is less than a first threshold, and a difference between a refractive index of the third material and the refractive index of the first material is greater than a second threshold.

2. The spotsize converter according to claim 1, wherein a cross section of the substrate layer (201) is concave, a cross section of the isolating layer (203) is concave, a cross section of the first coverage layer (202) is a rectangle, and the spotsize converter further comprises:
   a second coverage layer (205) disposed above the substrate layer (201), wherein the second coverage layer (205) is disposed outside the isolating layer (203), and the second coverage layer (205) uses the first material.

3. The spotsize converter according to claim 1 or 2, wherein the waveguide (204') further comprises a fourth waveguide (304) disposed above the third waveguide (303), wherein a width of the fourth waveguide (304) gradually increases along the first direction, and the width of the fourth waveguide (304) is less than the width of the third waveguide (303) on any cross section between the first end of the third waveguide (303) and the second end of the third waveguide (303).

4. The spotsize converter according to claim 3, wherein a shape of the third waveguide (303) is an isosceles trapezoid, a shape of the fourth waveguide (304) is an isosceles triangle, and the first waveguide (301) and the second waveguide (302) are S-shaped, and a length of the fourth waveguide (304) is equal to a length of the third waveguide (303), the fourth waveguide (304) is aligned with the third waveguide (303) at the second end of the third waveguide

(303), and a width of an end at which a baseline of the isosceles triangle of the fourth waveguide (304) is located is equal to a width of the second end of the third waveguide (303).

5. The spotsize converter according to claim 3 or 4, wherein a length of the waveguide (204') is L1, lengths of the third waveguide (303) and the fourth waveguide (304) are L2, thickness of the first waveguide (301), thickness of the second waveguide (302), and thickness of the third waveguide (303) are H1, thickness of the fourth waveguide (304) is H2, widths of the first waveguide (301) and the second waveguide (302) are W1, the width of the second end of the third waveguide (303) is W2, and a distance between the waveguide (204') and a bottom of the isolating layer (203) is H3, wherein

$$0 < L1 \leq 500 \ \mu m, \ 0 < L2 \leq 200 \ \mu m, \ 0 < H1 \leq H1{+}H2 \leq 400 \ nm, \ H3 > 5 \ \mu m, \ 0 < W1 \leq 300$$

$$nm, \ and \ 200 \ nm \leq W2 \leq 600 \ nm.$$

6. The spotsize converter according to claim 5, wherein
L1=300 $\mu$m, L2=100 $\mu$m, H1=120 nm, H2=100 nm, W1=180 nm, W2=500 nm.

7. The spotsize converter according to any one of claims 1 to 6, wherein a distance between the second end of the first waveguide (301) and a second end of the second waveguide (302) is greater than 1 $\mu$m and less than 10 $\mu$m.

8. The spotsize converter according to any one of claims 1 to 7, wherein the waveguide (204, 204') further comprises N add/drop waveguides, and
the N add/drop waveguides are connected to the first end of the third waveguide (303), and the N add/drop waveguides are aligned with the first waveguide (301), wherein N is a positive integer.

9. The spotsize converter according to any one of claims 1 to 8, wherein a material used by the substrate layer (201) is silicon, the first material is silicon dioxide, the second material is engine oil, and the third material is silicon or silicon nitride.

10. An apparatus for optical transmission, wherein the apparatus comprises:

the spotsize converter (200, 300, 1401) according to any one of claims 1 to 9 and an optical waveguide (1402), wherein
the spotsize converter is configured to couple an optical signal to the optical waveguide (1402), wherein the optical signal is input from an optical fiber.

11. The apparatus according to claim 10, wherein the spotsize converter is connected to the optical waveguide (1402) by using a second end of a third waveguide (303) and a width of the second end of the third waveguide (303) is equal to a width of the optical waveguide (1402).

12. The apparatus according to claim 10 or 11, wherein a sum of the thickness of the third waveguide (303) and the thickness of the fourth waveguide (304) according to any one of claims 3 to 6 is equal to thickness of the optical waveguide (1402).

**Patentansprüche**

1. Spotgrößenkonverter (200, 300, 1401), wobei der Spotgrößenkonverter umfasst:

eine Substratschicht (201);
eine erste Abdeckungsschicht (202), die über der Substratschicht (201) angeordnet ist, wobei die erste Abdeckschicht (202) ein erstes Material verwendet;
eine Isolationsschicht (203), die zwischen der Substratschicht (201) und der ersten Abdeckschicht (202) angeordnet ist, wobei die Isolationsschicht (203) ein zweites Material verwendet; und
einen Wellenleiter (204, 204'), der innerhalb der ersten Abdeckschicht (202) angeordnet ist, wobei der Wellenleiter (204, 204') symmetrisch entlang einer Hauptachse ist, und der Wellenleiter (204, 204') ein drittes Material verwendet;

wobei

der Wellenleiter (204, 204') einen ersten Wellenleiter (301) mit gleicher Breite, einen zweiten Wellenleiter (302) mit gleicher Breite und einen dritten Wellenleiter (303) umfasst, wobei ein erstes Ende des dritten Wellenleiters (303) mit einem ersten Ende des ersten Wellenleiters (301) verbunden ist, das erste Ende des dritten Wellenleiters (303) mit einem ersten Ende des zweiten Wellenleiters (302) verbunden ist und der erste Wellenleiter (301), der zweite Wellenleiter (302) und der dritte Wellenleiter (303) eine Y-Form bilden;

entlang einer ersten Richtung der Hauptachse eine Breite des dritten Wellenleiters (303) schrittweise von dem ersten Ende des dritten Wellenleiters (303) zu einem zweiten Ende des dritten Wellenleiters (303) zunimmt, und eine Distanz, in einer zweiten Richtung, zwischen dem ersten Wellenleiter (301) und dem zweiten Wellenleiter (302) schrittweise von einem zweiten Ende des ersten Wellenleiters (301) zu dem ersten Ende des ersten Wellenleiters (301) abnimmt, wobei die zweite Richtung auf einer Ebene positioniert ist, auf der der Wellenleiter (204, 204') positioniert ist, und die zweite Richtung senkrecht zur ersten Richtung ist; und

ein absoluter Wert einer Differenz zwischen einem Refraktionsindex des zweiten Materials und einem Refraktionsindex des ersten Materials geringer ist als ein erster Schwellenwert, und eine Differenz zwischen einem Refraktionsindex des dritten Materials und des Refraktionsindex des ersten Materials größer ist als ein zweiter Schwellenwert.

2. Spotgrößenkonverter nach Anspruch 1, wobei ein Querschnitt der Substratschicht (201) konkav ist, ein Querschnitt der Isolationsschicht (203) konkav ist, ein Querschnitt der ersten Abdeckungsschicht (202) ein Rechteck ist und der Spotgrößenkonverter ferner umfasst:

eine zweite Abdeckungsschicht (205), die über der Substratschicht (201) angeordnet ist, wobei die zweite Abdeckungsschicht (205) außerhalb der Isolationsschicht (203) angeordnet ist und die zweite Abdeckschicht (205) das erste Material verwendet.

3. Spotgrößenkonverter nach Anspruch 1 oder 2, wobei der Wellenleiter (204') ferner einen vierten Wellenleiter (304) umfasst, der über dem dritten Wellenleiter (303) angeordnet ist, wobei eine Breite des vierten Wellenleiters (304) schrittweise entlang der ersten Richtung zunimmt, und die Breite des vierten Wellenleiters (304) kleiner ist als die Breite des dritten Wellenleiters (303) eines beliebigen Querschnitts zwischen dem ersten Ende des dritten Wellenleiters (303) und dem zweiten Ende des dritten Wellenleiters (303).

4. Spotgrößenkonverter nach Anspruch 3, wobei eine Form des dritten Wellenleiters (303) ein gleichschenkliges Trapez ist, eine Form des vierten Wellenleiters (304) ein gleichschenkliges Dreieck ist und der erste Wellenleiter (301) und der zweite Wellenleiter (302) S-förmig sind, und eine Länge des vierten Wellenleiters (304) einer Länge des dritten Wellenleiters (303) gleich ist, wobei der vierte Wellenleiter (304) auf den dritten Wellenleiter (303) am zweiten Ende des dritten Wellenleiters (303) ausgerichtet ist, und eine Breite eines Endes, an dem eine Basislinie des gleichschenkligen Dreiecks des vierten Wellenleiters (304) positioniert ist, einer Breite des zweiten Endes des dritten Wellenleiters (303) gleich ist.

5. Spotgrößenkonverter nach Anspruch 3 oder 4, wobei eine Länge des Wellenleiters (204') L1 ist, Längen des dritten Wellenleiters (303) und des vierten Wellenleiters (304) L2 sind, die Dicke des ersten Wellenleiters (301), die Dicke des zweiten Wellenleiters (302) und die Dicke des dritten Wellenleiters (303) H1 sind, die Dicke des vierten Wellenleiters (304) H2 ist, die Breiten des ersten Wellenleiters (301) und des zweiten Wellenleiters (302) W1 sind, die Breite des zweiten Endes des dritten Wellenleiters (303) W2 ist und eine Distanz zwischen dem Wellenleiter (204') und einem Boden der Isolationsschicht (203) H3 ist, wobei

$$0 < L1 \leq 500 \ \mu m, \ 0 < L2 \leq 200 \ \mu m, \ 0 < H1 \leq H1{+}H2 \leq 400 \ nm, \ H3 > 5 \ \mu m, \ 0 <$$
$$W1 \leq 300 \ nm \ und \ 200 \ nm \leq W2 \leq 600 \ nm.$$

6. Spotgrößenkonverter nach Anspruch 5, wobei
L1=300 $\mu$m, L2=100 $\mu$m, H1=120 nm, H2=100 nm, W1=180 nm, W2=500 nm.

7. Spotgrößenkonverter nach einem der Ansprüche 1 bis 6, wobei eine Distanz zwischen dem zweiten Ende des ersten Wellenleiters (301) und einem zweiten Ende des zweiten Wellenleiters (302) größer als 1 $\mu$m und kleiner als 10 $\mu$m ist.

8. Spotgrößenkonverter nach einem der Ansprüche 1 bis 7, wobei der Wellenleiter (204, 204') ferner N add/drop-Wellenleiter umfasst, und
die N add/drop-Wellenleiter mit dem ersten Ende des dritten Wellenleiters (303) verbunden sind, und die N add/drop-Wellenleiter auf den ersten Wellenleiter (301) ausgerichtet sind, wobei N eine positive ganze Zahl ist.

9. Spotgrößenkonverter nach einem der Ansprüche 1 bis 8, wobei ein von der Substratschicht (201) verwendetes Material Silizium ist, das erste Material Siliziumdioxid ist, das zweite Material ein Motoröl ist und das dritte Material Silizium oder Siliziumnitrid ist.

10. Vorrichtung für optische Übertragung, wobei die Vorrichtung umfasst:

den Spotgrößenkonverter (200, 300, 1401) gemäß einem der Ansprüche 1 bis 9 und einen optischen Wellenleiter (1402), wobei
der Spotgrößenkonverter konfiguriert ist, ein optisches Signal mit dem optischen Wellenleiter (1402) zu verbinden, wobei das optische Signal von einer Glasfaser eingegeben wird.

11. Vorrichtung nach Anspruch 10, wobei der Spotgrößenkonverter mit dem optischen Wellenleiter (1402) unter Verwendung eines zweiten Endes eines dritten Wellenleiters (303) verbunden ist und eine Breite des zweiten Endes des dritten Wellenleiters (303) einer Breite des optischen Wellenleiters (1402) gleich ist.

12. Vorrichtung nach Anspruch 10 oder 11, wobei eine Summe der Dicke des dritten Wellenleiters (303) und der Dicke des vierten Wellenleiters (304) nach einem der Ansprüche 3 bis 6 der Dicke des optischen Wellenleiters (1402) gleich ist.

**Revendications**

1. Convertisseur de taille de point (200, 300, 1401), le convertisseur de taille de point comprenant :

une couche de substrat (201) ;
une première couche de couverture (202) disposée sur la couche de substrat (201), la première couche de couverture (202) utilisant un premier matériau ;
une couche isolante (203) disposée entre la couche de substrat (201) et la première couche de couverture (202), la couche isolante (203) utilisant un deuxième matériau ; et
un guide d'ondes (204, 204') disposé à l'intérieur de la première couche de couverture (202), le guide d'ondes (204, 204') étant symétrique le long d'un axe principal, et le guide d'ondes (204, 204') utilisant un troisième matériau ; dans lequel :

le guide d'ondes (204, 204') comprend un premier guide d'ondes de largeur égale (301), un deuxième guide d'ondes de largeur égale (302) et un troisième guide d'ondes (303), une première extrémité du troisième guide d'ondes (303) est connectée à une première extrémité du premier guide d'ondes (301), la première extrémité du troisième guide d'ondes (303) est connectée à une première extrémité du deuxième guide d'ondes (302), et le premier guide d'ondes (301), le deuxième guide d'ondes (302) et le troisième guide d'onde (303) présentent une forme de Y ;
le long d'une première direction de l'axe principal, une largeur du troisième guide d'ondes (303) augmente progressivement de la première extrémité du troisième guide d'ondes (303) à une seconde extrémité du troisième guide d'ondes (303), et une distance, dans une seconde direction, entre le premier guide d'ondes (301) et le deuxième guide d'ondes (302) diminue progressivement d'une seconde extrémité du premier guide d'ondes (301) à la première extrémité du premier guide d'ondes (301), la seconde direction étant située sur un plan sur lequel le guide d'ondes (204, 204') est situé, et la seconde direction étant perpendiculaire à la première direction ; et
une valeur absolue d'une différence entre un indice de réfraction du deuxième matériau et un indice de réfraction du premier matériau est inférieure à un premier seuil, et une différence entre un indice de réfraction du troisième matériau et l'indice de réfraction du premier matériau est supérieure à un second seuil.

2. Convertisseur de taille de point selon la revendication 1, dans lequel une section transversale de la couche de substrat (201) est concave, une section transversale de la couche isolante (203) est concave, une section transversale de la première couche de couverture (202) est un rectangle, et le convertisseur de taille de point comprend en outre :
une seconde couche de couverture (205) disposée sur la couche de substrat (201), la seconde couche de couverture (205) étant disposée à l'extérieur de la couche isolante (203), et la seconde couche de couverture (205) utilisant le premier matériau.

3. Convertisseur de taille de point selon la revendication 1 ou 2, dans lequel le guide d'ondes (204') comprend en outre un quatrième guide d'ondes (304) disposé sur le troisième guide d'ondes (303), une largeur du quatrième guide d'ondes (304) augmentant progressivement le long de la première direction, et la largeur du quatrième guide d'ondes (304) étant inférieure à la largeur du troisième guide d'ondes (303) sur une section transversale quelconque entre la première extrémité du troisième guide d'ondes (303) et la seconde extrémité du troisième guide d'ondes (303).

4. Convertisseur de taille de point selon la revendication 3, dans lequel une forme du troisième guide d'ondes (303) est un trapèze isocèle, une forme du quatrième guide d'ondes (304) est un triangle isocèle, et le premier guide d'ondes (301) et le deuxième guide d'ondes (302) sont en forme de S, et une longueur du quatrième guide d'ondes (304) est égale à une longueur du troisième guide d'ondes (303), le quatrième guide d'ondes (304) est aligné avec le troisième guide d'onde (303) au niveau de la seconde extrémité du troisième guide d'ondes (303), et une largeur d'une extrémité au niveau de laquelle se situe une base du triangle isocèle du quatrième guide d'ondes (304) est égale à une largeur de la seconde extrémité du troisième guide d'ondes (303).

5. Convertisseur de taille de point selon la revendication 3 ou 4, dans lequel une longueur du guide d'ondes (204') est L1, les longueurs du troisième guide d'ondes (303) et du quatrième guide d'ondes (304) sont L2, l'épaisseur du premier guide d'ondes (301), l'épaisseur du deuxième guide d'ondes (302) et l'épaisseur du troisième guide d'ondes (303) sont H1, l'épaisseur du quatrième guide d'ondes (304) est H2, les largeurs du premier guide d'ondes (301) et du deuxième guide d'ondes (302) sont W1, la largeur de la seconde extrémité du troisième guide d'ondes (303) est W2, et une distance entre le guide d'ondes (204') et une partie inférieure de la couche isolante (203) est H3, où

$$0 < L1 \leq 500 \ \mu m, \ 0 < L2 \leq 200 \ \mu m, \ 0 < H1 \leq H1+H2 \leq 400 \ nm, \ H3 > 5 \ \mu m, \ 0 < W1 \leq 300 \ nm, \ et \ 200 \ nm \leq W2 \leq 600 \ nm.$$

6. Convertisseur de taille de point selon la revendication 5, dans lequel :
L1=300 $\mu$m, L2=100 $\mu$m, H1=120 nm, H2=100 nm, W1=180 nm, W2=500 nm.

7. Convertisseur de taille de point selon l'une quelconque des revendications 1 à 6, dans lequel une distance entre la seconde extrémité du premier guide d'ondes (301) et une seconde extrémité du deuxième guide d'ondes (302) est supérieure à 1 $\mu$m et inférieure à 10 $\mu$m.

8. Convertisseur de taille de point selon l'une quelconque des revendications 1 à 7, dans lequel le guide d'ondes (204, 204') comprend en outre N guides d'ondes d'insertion/extraction, et les N guides d'ondes d'insertion/extraction sont connectés à la première extrémité du troisième guide d'ondes (303), et les N guides d'ondes d'insertion/extraction sont alignés avec le premier guide d'ondes (301), N étant un entier positif.

9. Convertisseur de taille de point selon l'une quelconque des revendications 1 à 8, dans lequel un matériau utilisé par la couche de substrat (201) est le silicium, le premier matériau est le dioxyde de silicium, le deuxième matériau est une huile de moteur et le troisième matériau est le silicium ou le nitrure de silicium.

10. Appareil de transmission optique, l'appareil comprenant :
le convertisseur de taille de point (200, 300, 1401) selon l'une quelconque des revendications 1 à 9 et un guide d'ondes optiques (1402), dans lequel le convertisseur de taille de point est conçu pour coupler un signal optique au guide d'ondes optiques (1402), le signal optique étant entré à partir d'une fibre optique.

11. Appareil selon la revendication 10, dans lequel le convertisseur de taille de point est connecté au guide d'ondes optiques (1402) au moyen d'une seconde extrémité d'un troisième guide d'ondes (303), et une largeur de la seconde extrémité du troisième guide d'ondes (303) est égale à une largeur du guide d'ondes optiques (1402).

12. Appareil selon la revendication 10 ou 11, dans lequel une somme de l'épaisseur du troisième guide d'ondes (303) et de l'épaisseur du quatrième guide d'ondes (304) selon l'une quelconque des revendications 3 à 6 est égale à l'épaisseur du guide d'ondes optiques (1402).

FIG. 1

FIG. 2

c-c'
b-b'
300
205
a-a'
204'
202
205
201
203

FIG. 3

W1
301
303     304
O   z
x
W2
W1
302
L2
L1

FIG. 4

FIG. 5

FIG. 6

FIG. 7

(a)          (b)                          (c)

FIG. 8

Coupling loss vs. Wavelength

FIG. 9

Coupling loss vs. Optical fiber alignment
tolerance

FIG. 10

Coupling loss vs. Optical fiber alignment tolerance

FIG. 11

FIG. 12

1400

1402

1401

FIG. 13

204'

1402

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QIAN WANG et al.** Y-branch spot-size converter for a buried silica waveguide with large index difference. *APPLIED OPTICS,* 01 June 2004, vol. 43 (16), 3315